# FASCICULE DE BREVET EUROPEEN

(11) **EP 0 332 485 B1**
(45) Date de publication et mention de la délivrance du brevet: **25.01.1995**
(21) Numéro de dépôt: 89400438.1
(22) Date de dépôt: 17.02.1989
(51) Int. Cl.: G11B 15/61, G11B 15/60

(54) **Dispositif de guidage de bande pour enregistreur/lecteur magnétique**
Bandführungsvorrichtung für ein magnetisches Aufnahme-/Wiedergabegerät
Type-guiding device for a magnetic-recording/reproducing apparatus

(30) Priorité: 26.02.1988 FR 8802367
(43) Date de publication de la demande: 13.09.1989
(73) Titulaire: SCHLUMBERGER INDUSTRIES, F-92120 Montrouge (FR)
(72) Inventeur: Abeille, Pierre, F-92330 Sceaux (FR); Coulie, Jean-Claude, F-92100 Boulogne-Billancourt (FR)
(74) Mandataire: Dupont, Henri

(56) Documents cités:
- FR-A- 2 219 486
- FR-A- 2 279 190
- GB-A- 2 169 433
- US-A- 3 495 753
- US-A- 4 573 619
- PATENT ABSTRACTS OF JAPAN, vol. 11, no. 116 (P-566)[2563], 11 avril 1987, page24 P 566; & JP-A-61 261 844 (MATSUSHITA ELECTRIC IND. CO. LTD) 19-11-1986
- PATENT ABSTRACTS OF JAPAN, vol. 3, no. 89 (E-126), 28 juillet 1979, 119 E 126;& JP-A-54 67 405 (SONY K.K.) 30-05-1979
- PATENT ABSTRACTS OF JAPAN, vol. 1, no. 148, 29 novembre 1977 page 7658 E 77;& JP-A-52 88 312 (MATSUSHITA DENKI SANGYO K.K.) 23-07-1977

## Description

La présente invention concerne un dispositif de guidage de bande pour enregistreur/lecteur magnétique du type dit à têtes tournantes, dans lequel les informations sont disposées sur la bande selon des segments parallèles inclinés.

On sait que tels enregistreurs comprennent une ou plusieurs têtes magnétiques d'enregistrement/lecture, fixées sur la périphérie d'un élément de révolution, coaxial à l'axe d'un tambour cylindrique contre la surface duquel est enroulée hélicoïdalement une bande magnétique défilant entre une bobine émettrice et une bobine réceptrice.

Les enregistreurs de ce type comprennent deux familles. Dans la première famille, les têtes sont fixées sur la périphérie d'un plateau tournant, coaxial au tambour, et disposé dans une fente prévue dans un plan équatorial du tambour; devant la fente défile ladite bande magnétique enroulée hélicoïdalement sur le tambour. Dans l'autre famille, le tambour comprend une partie inférieure fixe et une partie supérieure tournante à laquelle les têtes sont fixées.

L'inclinaison des pistes sur la bande est principalement fonction de l'inclinaison de la bande par rapport au plan de rotation des têtes.

Or, l'inclinaison des pistes sur la bande est généralement fixée par une norme ou constitue un standard.

En conséquence, les informations enregistrées sur la bande doivent être disposées sur la bande de manière précise, faute de quoi, à la lecture, les têtes ne suivent plus les pistes enregistrées sur la bande.

Ceci suppose que la bande est guidée de manière précise, afin que le défilement de la bande sur le tambour ait lieu exactement au même endroit, que ce soit entre l'enregistrement et la lecture, (lorsque l'enregistrement et la lecture sont effectués par des appareils distincts) ou bien pendant une même opération d'enregistrement ou de lecture (à l'aide du même appareil).

A titre indicatif, la largeur d'une piste est de l'ordre de quelques dizaines de microns.

On comprend l'importance du guidage de la bande sur le tambour, qui doit être réalisé avec une précision de l'ordre de quelques microns.

Par ailleurs, l'amélioration continue des performances de tels enregistreurs conduit notamment à augmenter la quantité d'informations susceptible d'être traitée. Ainsi, pour des dimensions données de bobine sur laquelle la bande est enroulée, on cherche à diminuer l'épaisseur de la bande, ou tout au moins de la couche de matériau formant le support, afin d'augmenter la longueur totale de bande enroulée.

Usuellement, de tels supports minces sont réalisés par étirage d'une couche support de plus grande épaisseur ; on aboutit ainsi à des valeurs d'épaisseur de quelques dizaines de microns, voire de dix microns.

Cependant, les bandes de ce type soulèvent une difficulté majeure.

En effet, la dilatation thermique d'une bande ayant subi un tel traitement n'est pas isotrope. Le coefficient de dilatation est généralement cinq fois plus élevé dans la direction transversale que la direction longitudinale.

Ainsi, l'angle d'inclinaison de pistes sur la bande varie avec la température. La dilatation thermique entraîne un déplacement de la bande, par rapport au tambour, en translation et en rotation.

En conséquence, si la température varie (entre l'enregistrement et la lecture par exemple, ou même pendant l'enregistrement), les pistes ne peuvent être lues de manière correcte par les têtes.
Il en résulte des pertes d'informations et donc une réduction notable de la fiabilité de l'enregistrement.

Cet inconvénient est rédhibitoire, notamment pour des valeurs de températures variant dans une large plage.

Le guidage de la bande est assuré, dans les dispositifs de l'art antérieur, soit par les galets/aiguilles disposés à l'entrée et la sortie du tambour, soit par une rampe hélicoïdale - rapportée sur le tambour ou usinée sur le corps de ce dernier - sur le bord de laquelle prend appui l'un des bords (inférieur ou supérieur) de la bande.

Le document GB-A- 2169433 décrit un dispositif pour le guidage d'une bande magnétique. La structure de guidage comprend une rampe hélicoïdale fixée dans un retrait pratiqué sur le tambour. La rampe est suffisament large pour s'avancer en saillie hors du retrait. La bande magnétique est guidée par ce rebord en saillie.

Le document JP-A- 61261844 décrit un dispositif de guidage de bande magnétique. La bande défile contre le tambour et porte sur un rebord usiné sur le stator. En outre, le stator comprend des moyens d'ajustement aptes à modifier l'inclinaison du rebord d'appui en fonction de la température. Cet ajustement est obtenu grâce à une lame déposée dans le stator, en matériau différent du stator. Les matériaux ayant un coefficient de dilatation thermique différent, des variations de températures donnent lieu à un effet de bilame. Ce dispositif ne permet de corriger des erreurs de suivi de piste que pour des bandes présentant une dilatation isotrope. De par l'effet de bilame, le parcours de la bande est globalement rehaussé ou abaissé mais son orientation et donc l'inclinaison des pistes est invariante dans ce mouvement.
Lors d'une variation de température, la hauteur des pistes varie et ce dispositif permet de compenser cette variation.

Néanmoins, aucun de ces dispositifs connus ne résoud le problème évoqué précédemment résultant de la dilatation thermique anisotropique de la bande.

Le dispositif selon l'invention tel que défini dans la revendication 1 se propose de rémédier à cet inconvénient.

De préférence, les moyens d'appui sont constitués d'une rampe hélicoïdale.

Plus particulièrement, dans le cas où les coefficients de dilatation thermique respectifs de la bande et du tambour sont sensiblement de même valeur, le dispositif est apte à provoquer par dilatation thermique différentielle, un mouvement de rotation de la rampe autour d'un axe radial (transversal à l'axe du tambour) passant par un point invariant en rotation, de position fixe quelle que soit la température.

Selon une première forme de réalisation, les moyens de liaison sont constitués d'organes de fixation aptes à assurer chacun une dilatation linéaire dont la valeur est fonction de la position de l'organe correspondant le long de la rampe.

Plus précisément, les moyens de liaison comprennent un ensemble de pattes réparties le long de la rampe et disposées parallèlement à l'axe du tambour, chacune fixée par une extrémité au tambour et par l'autre extrémité à la base de la rampe, lesdites pattes étant d'une part constituées d'un matériau à coefficient de dilatation thermique différent au moins du matériau constituant le tambour, et d'autre part de longueur croissante suivant leur position le long de la rampe.

De préférence, dans le cas où les coefficients de dilatation thermique respectifs de la bande et du tambour sont sensiblement de même valeur, l'une des extrémités (dans le sens longitudinal) de la rampe est fixée au tambour de manière à constituer un point invariant de référence.

Par exemple, la rampe et le tambour sont en alliage d'aluminium et les pattes sont en alliage de fer et nickel (connu sous la marque Invar).

Selon une seconde forme de réalisation, le dispositif est apte à permettre un allongement longitudinal, par dilatation thermique, de la rampe par rapport au tambour, et à transformer celui-ci en un mouvement de rotation d'axe radial.

Plus précisément, la rampe et le tambour sont constitués de matériaux à coefficient de dilatation thermique différents, les moyens de liaison comprenant un ensemble de tourillons répartis le long du tambour, de direction axiale, faisant saillie par rapport à la surface de celui-ci, et aptes à coopérer avec des lumières prévues sur la rampe, lesdites lumières étant de forme générale allongée suivant une direction inclinée par rapport à la direction longitudinale de la rampe, et de largeur telle qu'elles constituent des lumières de guidage.

De préférence, dans le cas où les coefficients de dilatation thermique respectifs de la bande et du tambour sont sensiblement de même valeur, la lumière prévue à l'une des extrémités de la rampe est de forme complémentaire au tourillon associé, de façon que ce dernier constitue un point invariant (de référence en rotation).

L'invention sera bien comprise à la lumière de la description qui suit, faite en relation avec le dessin annexé dans lequel :
- La figure 1 est une vue schématique en perspective d'un enregistreur montrant le chemin de bande ;
- La figure 2 est une vue de dessus de la figure 1 ;
- La figure 3 montre de côté un tambour pourvu du dispositif selon l'invention ;
- La figure 4 est une vue en coupe montrant en détail la disposition respective du tambour et de la rampe ;
- La figure 5 est une vue schématique développée d'un premier exemple de réalisation du dispositif selon l'invention ;
- La figure 6 est une coupe suivant l'axe VI-VI de la figure 5 ;
- La figure 7 est une vue similaire à la figure 5 montrant une variante de réalisation;
- La figure 8 est une vue en coupe suivant l'axe VIII-VIII de la figure 7; et
- La figure 9 est une vue en coupe, à une échelle agrandie, des moyens de liaison de la rampe des figures 7 et 8.

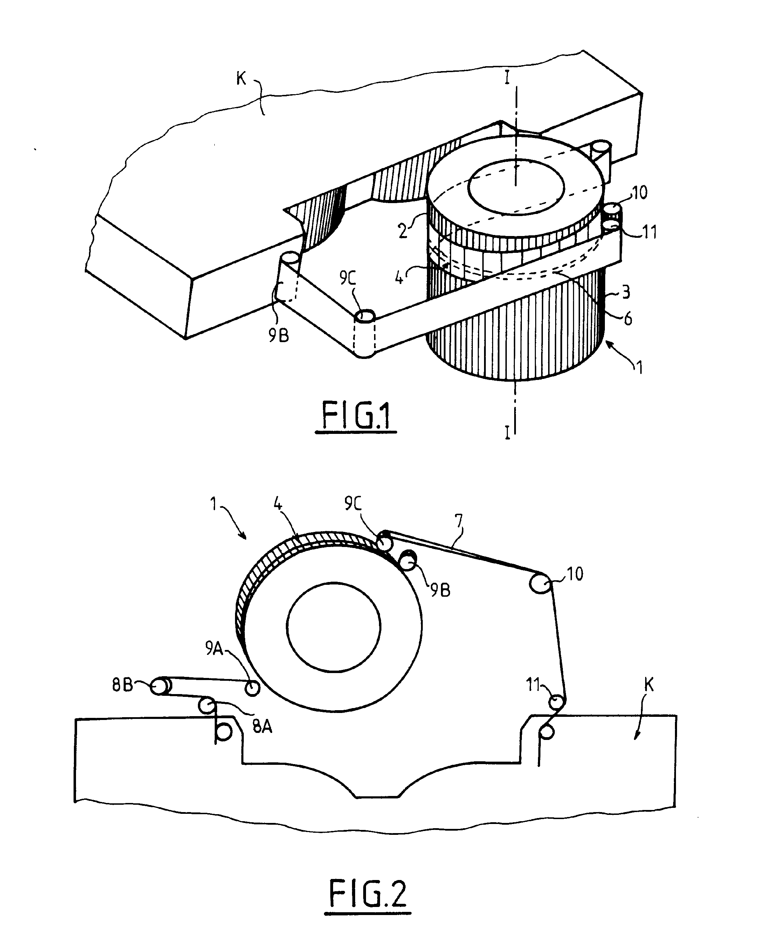

Le dispositif de la présente invention est décrit ci-après en relation avec un appareil d'enregistrement/lecture à têtes magnétiques tournantes, du type connu en soi, et représenté schématiquement sur les figures 1 et 2.

L'enregistreur/lecteur comporte un tambour cylindrique 1 constitué d'un tambour supérieur 2 et d'un tambour inférieur 3, séparés par une fente 4 disposée dans un plan équatorial perpendiculaire à l'axe I-I du tambour et sensiblement à mi-hauteur de ce dernier.

Dans cette fente, est prévu un élément en forme de disque, susceptible d'être animé d'un mouvement rotatif autour de l'axe I-I du tambour. Le disque est porteur d'une, et généralement de plusieurs têtes magnétiques 6 disposées régulièrement sur sa périphérie et faisant très légèrement saillie par rapport à la surface définissant la paroi du tambour.

Une bande magnétique 7 est susceptible de s'enrouler hélicoïdalement autour du tambour 1 pour former, en vue de dessus comme montré sur la figure 2, un oméga. Un ensemble de galets 8A, 8B, 9A, 9B, 9C, 10 et 11, guident la bande 7 et la maintiennent selon cette configuration pendant son défilement, depuis une bobine débitrice vers une bobine réceptrice (non représentées et connues en elles-mêmes) d'une cassette K. Les informations sont enregistrées/lues sur la bande selon des segments de pistes parallèles et obliques par rapport à l'axe de la bande.

Il est entendu que l'invention est également susceptible de s'appliquer à un enregistreur à têtes tournantes dans lequel la partie supérieure du tambour est rotative et porte sur sa base les têtes.

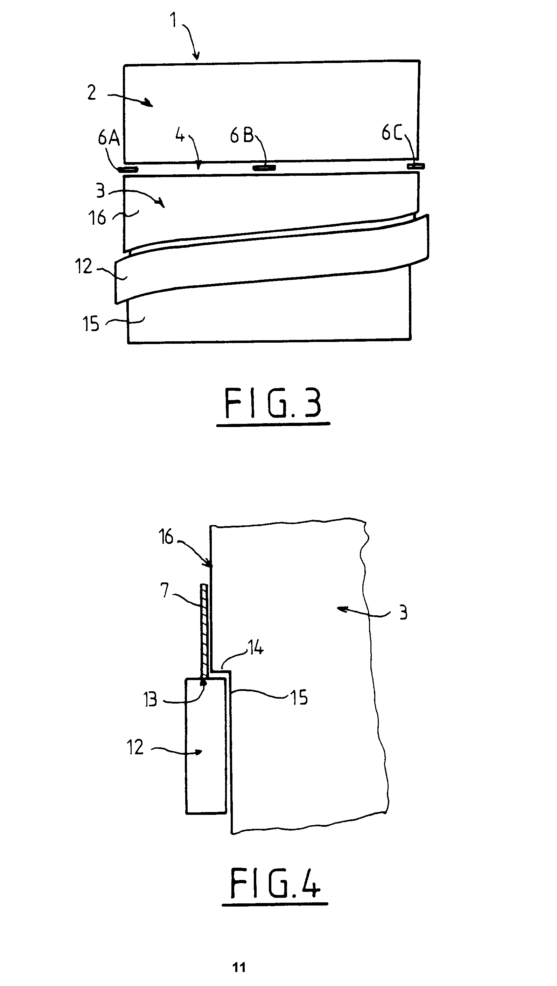

Les figures 3 et 4 montrent schématiquement le dispositif de guidage selon l'invention et sa relation avec le tambour 1.

Dans la fente 4 équatoriale du tambour 1 tournent les têtes magnétiques 6A, 6B et 6C (trois d'entre elles seulement sont représentées). Une bande magnétique 7 (figure 4) s'enroule hélicoïdalement sur le tambour et repose par son bord inférieur sur une rampe hélicoïdale de guidage 12 plaquée sur le tambour inférieur 3. Le bord supérieur 13 de la rampe 12 présente un profil conforme au chemin de bande et constitue une surface de guidage de celle-ci.

La rampe est en forme de ruban à section rectangulaire, ses deux plus grandes faces étant parallèles à la surface du tambour.

Le tambour inférieur 3 comporte de préférence un épaulement 14 définissant une zone en retrait délimitée par une surface 15 cylindrique définissant le tambour inférieur (surface 16).

La rampe 12 est logée en partie dans la zone en retrait tout en faisant saillie par rapport à la surface 16. Ainsi, la bande magnétique 7 (dont seulement la partie inférieure a été représentée sur la figure 4) porte contre la surface 16 du tambour et prend appui, sur le bord supérieur de guidage 13 de la rampe. Vu en plan, c'est-à-dire le tambour et la rampe étant développés à plat, le bord supérieur 13 forme un segment de droite, incliné selon un angle défini, fonction de l'inclinaison des pistes sur la bande.

A titre illustratif, la rampe à une longueur de 170 mm et une hauteur de 10 mm (pour un tambour de 75 mm de diamètre).

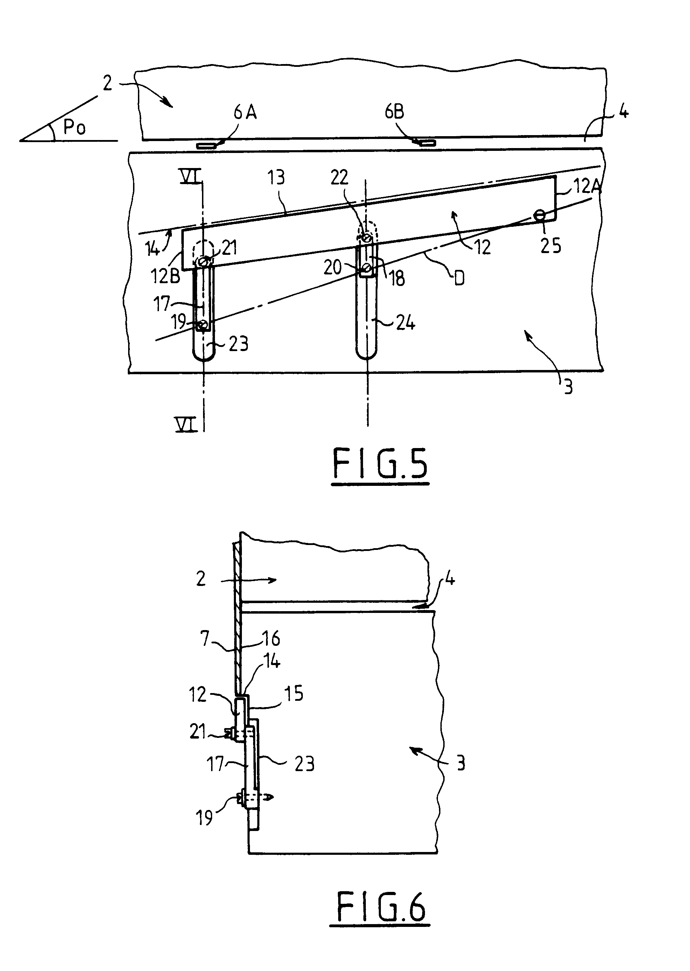

Les moyens de liaison de la rampe selon l'invention sur le tambour sont décrits en détail ci-après, en référence aux figures 5 et 6 montrant une première forme de réalisation.

La figure 5 montre une partie du tambour inférieur 3 et du tambour supérieur 2 représentés en plan, les surfaces étant développées dans le plan de la feuille.

La rampe 12 et le tambour 1 sont constitués de matériaux présentant des coefficients respectifs de dilatation thermique de même valeur (ou très proches). De préférence, la rampe et le tambour sont constitués du même matériau tel que par exemple de l'aluminium.

Pour des raisons de commodité de langage, il sera fait par la suite référence à l'unique expression dilatation thermique, qui englobera en fait toute variation de longueur (dilatation ou contraction) par effet thermique.

La rampe est liée au tambour par l'intermédiaire de pattes 17,18 disposées parallèlement à l'axe du tambour. Chaque patte a son extrémité inférieure fixée au tambour par une vis respectivement 19,20, et son extrémité supérieure rendue solidaire de la rampe 12 par une vis (respectivement 21,22). De préférence, le tambour inférieur 3 comprend des rainures 23,24, disposées sous le premier épaulement 14 mentionné précédemment, et aptes à recevoir chacune une des pattes 17,18.

Les pattes sont uniformément réparties le long de la rampe de guidage et sont de longueur croissante, d'une extrémité 12A à l'autre 12B de la rampe. Selon l'exemple représenté sur la figure 5, sont prévues deux pattes 17 et 18 disposées respectivement à une extrémité 12B et au milieu de la rampe, tandis que l'autre extrémité 12A est fixée directement au tambour par une vis 25.

La longueur des pattes est telle que les trois points de fixation de la rampe sur le tambour, définis par les trois vis respectives 19,20 et 25 soient alignés selon une droite D.

Les pattes de fixation 17 et 18 sont constituées de matériaux présentant des coefficients de dilatation thermique identiques. De préférence, les pattes sont formées d'un même matériau, tel que par exemple un alliage de fer et nickel (connu sous la marque Invar).

Par ailleurs, les pattes 17 et 18 sont constituées d'un matériau présentant un coefficient de dilatation thermique sensiblement différent au moins du coefficient de dilatation du tambour.

Ainsi, pour une température T1 donnée, de l'air ambiant dans lequel fonctionne l'enregistreur/lecteur et/ou de l'ensemble tambour/bande, le bord supérieur 13 de la rampe de guidage 12 définit une droite D (vu en plan) d'inclinaison ALPHA1 par rapport à un plan de référence Po, défini comme le plan de rotation des têtes.

Lorsque la température varie (que ce soit entre l'enregistrement et la lecture ou pendant une même opération de lecture ou d'enregistrement) et prend la valeur T2 (T2 différent de T1), aucune dilatation différentielle n'intervient entre la rampe et le tambour qui se dilatent de manière homothétique respectivement.

En revanche, les pattes étant en un matériau à coefficient de dilatation thermique différent de celui du matériau formant le tambour, provoquent par leur dilatation un déplacement parallèlement à l'axe du tambour de la rampe.

Chaque patte s'allonge d'une longueur absolue d'autant plus grande que sa longueur est grande.

La rampe subit en conséquence un mouvement de rotation autour d'un axe radial, transversal à l'axe du tambour, et passant par le point de fixation invariant défini par la vis 25 (proche de l'une des extrémités de la rampe).

Ainsi, l'inclinaison du bord supérieur d'appui 13 prend pour T2 une valeur ALPHA2 (avec ALPHA2 différent de ALPHA1).

La longueur de chaque patte et leur répartition le long de la rampe, autrement dit la pente de la droite D rejoignant les points de fixation sur le tambour, sont déterminées en fonction des coefficients de dilatation thermique des matériaux constituant la rampe, le tambour et les pattes, de manière que la variation d'inclinaison des pistes sur la bande (par suite de la dilatation anisotropique de la bande) soit exactement compensée par la variation d'inclinaison de la rampe.

La forme de réalisation des figures 5 et 6 ne constitue en fait qu'un cas particulier, pour lequel les coefficients respectifs de dilatation thermique du tambour (par exemple en aluminium) et de la bande, notamment transversal, (par exemple en un matériau connu sous l'appellation commercialle MYLAR) sont très voisins. Si ces deux coefficients étaient très différents, la dilatation thermique de la bande par rapport au tambour se traduirait par un mouvement de rotation et de translation ; il conviendrait dans cette hypothèse de fixer l'extrémité 12A de la rampe, non pas par une vis, mais par une patte supplémentaire (de longueur inférieure à la patte 18 voisine).

De même, il a été mentionné que les coefficients de dilatation thermique respectifs du tambour et de la rampe étaient voisins ; l'invention s'applique également au cas où ils sont différents ; il convient alors de prévoir un degré de liberté en rotation des pattes sur le tambour pour tenir compte de l'allongement différentiel de la rampe par rapport au tambour. Ainsi, les vis 19 et 20 devraient permettre la rotation (de faible amplitude) des pattes respectives 17 et 18.

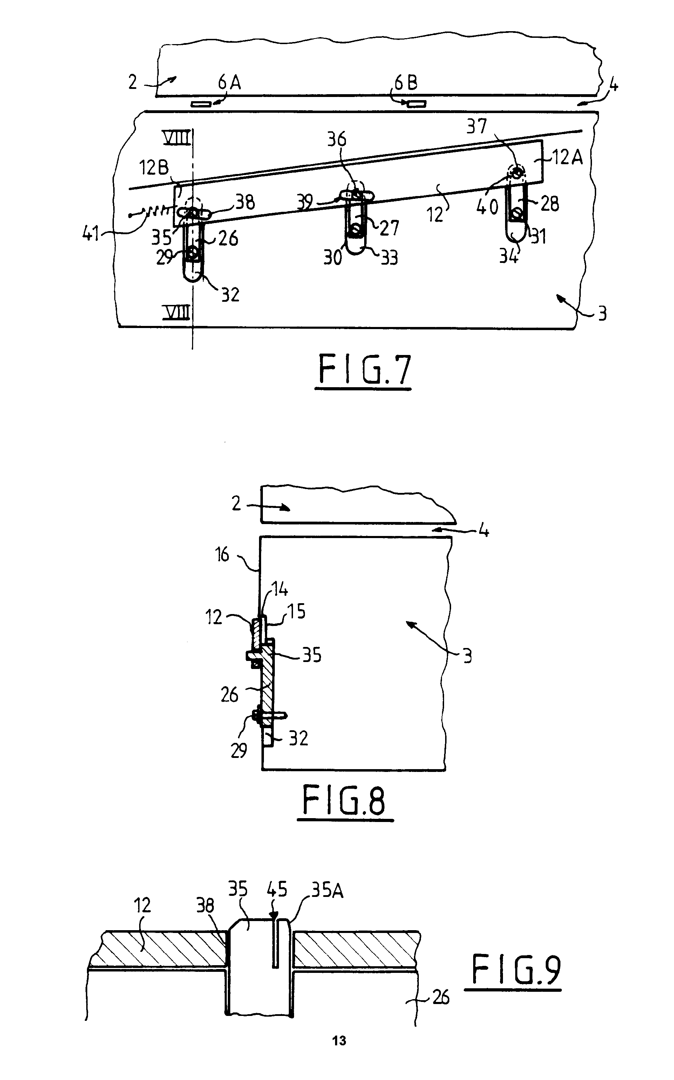

Les figures 7 et 8 montrent une seconde forme de réalisation de l'invention (constituant une variante de la réalisation montrée sur les figures 5 et 6).

La rampe 12 est liée au tambour par l'intermédiaire de semelles longiformes 26,27,28, parallèles à l'axe du tambour, et fixées à ce dernier par des vis respectivement 29,30,31. Les semelles sont réparties le long de la rampe ; selon l'exemple représenté sur la figure 7, sont prévues, une semelle 26 à une extrémité 12B, une semelle 27 au milieu et une semelle 28 à l'autre extrémité 12A de la rampe.

Chaque semelle est disposée dans un évidement 32,33,34 de forme générale complémentaire prévu sur le tambour inférieur 3, sous l'épaulement 14 définissant la zone en retrait recevant la rampe.

Les semelles et la rampe sont disposées face contre face ; la rampe porte par sa partie inférieure contre la partie supérieure de chaque semelle sur laquelle est fixé un tourillon de direction axiale, respectivement 35,36,37. Chaque tourillon coopère avec une lumière 38,39,40 prévue dans la rampe. Les semelles sont destinées à permettre de règler de manière précise la position de la rampe sur le tambour ; en variante, les tourillons pourraient être fixés directement sur le tambour, sans éléments intermédiaires.

La lumière 40, proche de l'extrémité 12A, est de forme complémentaire de celle du tourillon 37 (de la semelle 28) auquel elle est associée. Le tourillon 37 constitue un point invariant de référence. Les autres lumières sont longiformes et de largeur telle qu'elles puissent coulisser en translation, par rapport aux tourillons fixes.

Les axes longitudinaux des lumières 38 et 39 sont légèrement inclinés par rapport à la direction longitudinale de la rampe.

Un organe de rappel, tel qu'un ressort 41, est fixé par une extrémité à l'extrémité 12B de la rampe (celle opposée à l'extrémité 12A reliée au tambour par le tourillon 37 formant point invariant) ; l'autre extrémité du ressort 41 est solidaire du tambour.

Les matériaux constituant la rampe et le tambour présentent des coefficients de dilatation thermique différents ; par exemple le tambour est en alliage d'aluminium et la rampe en acier. Le tambour et les semelles sont constitués de matériaux respectifs présentant des coefficients de dilatation thermique identiques.

Lorsque la température de l'atmosphère ambiante (et/ou de l'ensemble tambour/bande) varie de T₁ à T₂, il apparait une dilatation différentielle longitudinale entre le tambour et la rampe ; celle-ci voit sa longueur varier et coulisse par rapport aux tourillons fixes suivant la direction des lumières inclinées 38 et 39.

Ainsi, le mouvement de translation (dû à la dilatation thermique) de la rampe comprend une composante transversale à son axe. Comme la rampe a son extrémité 12A solidaire d'un point invariant de référence correspondant au tourillon 37, le mouvement en translation de la rampe est donc transformé en un mouvement de rotation autour d'un axe radial matérialisé par le tourillon 37.

L'inclinaison des lumières allongées 38,39 est déterminée de manière que la rotation d'axe radial de la rampe induise une variation de l'inclinaison de celle-ci apte à compenser la variation d'inclinaison des pistes sur la bande (due à la déformation anisotropique de cette dernière).

La remarque mentionnée précédemment, en relation avec les figures 5 et 6, et concernant les coefficients de dilatation thermique respectifs du tambour et de la rampe, s'applique à la forme de réalisation des figures 7 et 8 ; en conséquence, dans le cas où ces deux coefficients sont différents, le tourillon d'extrémité 37 est associé à une lumière 40 allongée d'axe parallèle à celui du tambour, pour permettre le déplacement en translation de la rampe.

Les tourillons 35, 36, 37 montrés sur les figures 7 et 8 sont représentés plus en détail en coupe sur la figure 9 montrant le tourillon 35; celui-ci comprend une fente 45 disposée dans un plan axial décalé par rapport au diamètre, et définnissant un segment cylindrique de taille réduite 35A destiné à jouer le rôle de ressort; en effet, le diamètre du tourillon est légèrement supérieur (ou égal) au diamètre de la lumière 38 prévue sur la rampe 12, de manière que, lors de la mise en place de cette dernière sur le tourillon, le segment cylindrique 35A de taille réduite fléchisse vers l'autre segment cylindrique par élasticité; ainsi, la rampe est guidée sur le tourillon sans jeu.

L'ensemble de la description qui précède fait référence à une rampe disposée hélicoïdalement sur le tambour et contre le bord duquel prend appui le bord inférieur de la bande.

Cet exemple ne constitue qu'un exemple particulier des moyens d'appui selon l'invention, qui peuvent tout aussi bien être constitués d'une pluralité de points d'appui alignés, séparés par des zones évidées où le bord de la bande ne prend pas appui. Ainsi, la rampe peut être constituée d'un ruban dont la partie supérieure est découpée de manière à former des créneaux, ou encore d'une pluralité de segments de ruban distincts et dont les bords supérieurs sont alignés (en vue développée).

De même, selon les formes de réalisations montrées et représentées, la bande porte par son bord inférieur contre les moyens d'appui, ce dernier constituant le bord de référence. En variante, les moyens d'appui peuvent être disposés de manière que la bande porte par son bord supérieur.

## Revendications

1. Dispositif pour le guidage d'une bande magnétique (7) apte à être enroulée hélicoïdalement sur un tambour cylindrique (1) et à défiler devant au moins une tête magnétique (6A-6C) animée d'un mouvement de rotation à la périphérie d'une fente (4) prévue dans un plan équatorial du tambour (1), du type comprenant des moyens d'appui (12) longiformes liés au tambour (1) et définissant au moins deux points d'appui sur lesquels l'un des bords (13) inférieur ou supérieur de la bande (7) est susceptible de porter, comprenant des moyens de liaison (17,18, 25; 26-28) des moyens d'appui (12) sur le tambour (1), caractérisé en ce que les moyens de liaison (17, 18, 25; 26-28) sont aptes à provoquer par dilatation thermique différentielle entre d'une part le tambour (1) et d'autre part lesdits moyens de liaison (17, 18, 25; 26-28) ou les moyens d'appui (12) une modification de l'inclinaison des moyens d'appui (12) en fonction de la température résultant d'un mouvement de rotation des moyens d'appui (12) autour d'un axe transversal à l'axe du tambour (1) et passant par un point de l'enveloppe dudit tambour (1) invariant en rotation, c'est à dire de position fixe quelle que soit la température.

2. Dispositif selon la revendication 1, caractérisé en ce que les moyens d'appui (12) sont constitués d'une rampe hélicoïdale.

3. Dispositif selon la revendication 2, caractérisé en ce que les moyens de liaison (17, 18, 25; 26 - 28) sont constitués d'organes de fixation aptes à assurer chacun une dilatation linéaire dont la valeur est fonction de la position de l'organe correspondant le long de la rampe.

4. Dispositif selon la revendication 3, caractérisé en ce que les moyens de liaison (17, 18, 25; 26 - 28) comprenant un ensemble de pattes réparties le long de la rampe et disposées parallèlement à l'axe du tambour, chacune solidaire par une extrémité du tambour et par l'autre extrémité à la base de la rampe, lesdites pattes étant d'une part constituées d'un matériau à coefficient de dilatation thermique différent au moins du matériau constituant le tambour, et d'autre part de longueur croissante suivant leur position le long de la rampe.

5. Dispositif selon la revendication 4, caractérisé en ce que l'une des extrémités (dans le sens longitudinal) de la rampe est fixée au tambour (1) de manière à constituer un point invariant de référence.

6. Dispositif selon l'une des revendications 3 à 5, caractérisé en ce que la rampe et le tambour (1) sont en alliage d'aluminium et les pattes sont en alliage de fer et nickel (connu sous la marque Invar).

7. Dispositif selon la revendication 1 ou 2, caractérisé en ce que les moyens de liaison (17, 18, 25; 26 - 28) sont aptes à permettre un allongement longitudinal, par dilatation thermique, des moyens d'appui par rapport au tambour, et à transformer celui-ci en un mouvement de rotation d'axe radial.

8. Dispositif selon les revendications 2 et 7, caractérisé en ce que la rampe et le tambour (1) sont constitués de matériaux à coefficient de dilatation thermique différents, les moyens de liaison comprenant un ensemble de tourillons (35, 36, 37) répartis le long du tambour (1), de direction axiale, faisant saillie par rapport à la surface de celui-ci, et aptes à coopérer avec des lumières (38, 39, 40) prévues sur la rampe, lesdites lumières étant de forme générale allongée suivant une direction inclinée par rapport à la direction longitudinale de la rampe, et de largeur telle qu'elles constituent des lumières de guidage.

9. Dispositif selon la revendication 8, caractérisé en ce que la lumière (40) prévue à l'une des extrémités de la rampe est de forme complémentaire au tourillon (37) associé, de façon que ce dernier constitue un point invariant de référence en rotation.

10. Dispositif selon la revendication 8 ou 9, caractérisé en ce que chaque tourillon (35, 36, 37) est fixé au tambour (1) par l'intermédiaire de moyens de réglage en position.

11. Dispositif selon l'une des revendications 8 à 10, caractérisé en ce que chaque tourillon (35, 36, 37) présente un diamètre légèrement supérieur (ou égal) au diamètre de la lumière (38, 39, 40) prévue sur la rampe, et comprend une fente axiale définissant un segment cylindrique de taille réduite destiné à jouer le rôle de ressort.

12. Appareil pour l'enregistrement et/ou la lecture d'informations sur bande magnétique, pourvu du dispositif selon l'une des revendications 1 à 11.

## Patentansprüche

1. Vorrichtung zur Führung eines Magnetbandes (7), das dazu geeignet ist, schraubenförmig auf eine zylindrische Trommel (1) aufgewickelt zu werden und vor wenigstens einem in Drehbewegung versetzten Magnetkopf (6A - 6C) am Umfang eines in einer Mittenebene der Trommel (1) vorgesehenen Spalts (4) vorbeizulaufen, von dem Typ mit länglichen Anlagemitteln (12), die mit der Trommel (1) verbunden sind und wenigstens zwei Anlagepunkte bilden können, an denen der untere oder obere Rand (13) des Bandes liegen kann, mit Mitteln (17, 18, 25; 26 - 28) zur Verbindung der Anlagemittel (12) an der Trommel (1), dadurch gekennzeichnet, daß die Verbindungsmittel (17, 18, 25; 26 - 28) dazu geeignet sind, durch unterschiedliche thermische Ausdehnung zwischen der Trommel (1) einerseits und der Verbindungsmittel (17, 18, 25; 26 - 28) oder der Anlagemittel (12) andererseits eine Änderung der Neigung der Anlagemittel (12) in Abhängigkeit von der Temperatur hervorzurufen, die sich durch eine Drehbewegung der Anlagemittel (12) um eine Achse ergibt, die quer zu der Achse der Trommel (1) liegt und durch einen drehinvarianten Punkt, d.h. einen Punkt mit unabhängig von der Temperatur fester Position, der Umhüllung der Trommel (1) verläuft.

2. Vorrichtung nach Anspruch 1, dadurch gekennzeichnet, daß die Anlagemittel (12) aus einer schraubenförmigen Rampe gebildet sind.

3. Vorrichtung nach Anspruch 2, dadurch gekennzeichnet, daß die Verbindungsmittel (17, 18, 25; 26 - 28) aus Befestigungsorganen gebildet sind, die dazu geeignet sind, jeweils eine lineare Ausdehnung sicherzustellen, deren Wert von der Position des entsprechenden Organs entlang der Rampe abhängt.

4. Vorrichtung nach Anspruch 3, dadurch gekennzeichnet, daß die Verbindungsmittel (17, 18, 25; 26 - 28) eine Einheit von Klammern umfassen, die entlang der Rampe verteilt und parallel zur Achse der Trommel angeordnet sind, wobei jede mit einem Ende mit der Trommel und mit dem anderen Ende mit der Basis der Rampe fest verbunden ist, wobei die Klammern einerseits aus einem Material mit einem thermischen Ausdehnungskoeffizienten, der sich wenigstens von dem die Trommel bildenden Material unterscheidet, gebildet sind, und andererseits nach ihrer Position entlang der Rampe eine zunehmende Länge aufweisen.

5. Vorrichtung nach Anspruch 4, dadurch gekennzeichnet, daß eines der Enden der Rampe (in Längsrichtung) an der Trommel (1) so befestigt ist, daß es einen invarianten Bezugspunkt bildet.

6. Vorrichtung nach einem der Ansprüche 3 bis 5, dadurch gekennzeichnet, daß die Rampe und die Trommel (1) aus einer Aluminiumlegierung und die Klammern aus einer (unter dem Handelsnahmen Invar bekannten Eisen- und Nickellegierung bestehen.

7. Vorrichtung nach Anspruch 1 oder 2, dadurch gekennzeichnet, daß die Verbindungsmittel (17, 18, 25; 26 - 28) dazu geeignet sind, durch thermische Ausdehnung eine Längsdehnung der Anlagemittel bezüglch der Trommel zu ermöglichen und diese in eine Drehbewegung mit radialer Achse umzuformen.

8. Vorrichtung nach den Ansprüchen 2 und 7, dadurch gekennzeichnet, daß die Rampe und die Trommel (1) aus Materialien mit unterschiedlichen thermischen Ausdehnungskoeffizienten gebildet sind, wobei die Verbindungsmittel eine Einheit aus Lagerzapfen (35, 36, 37) mit axialer Richtung aufweisen, die entlang der Trommel (1) verteilt sind, bezüglich ihrer Oberfläche vorspringen und dazu geeignet sind, mit an der Rampe vorgesehenen Langlöchern (38, 39, 40) zusammenzuwirken, wobei die Langlöcher eine allgemein nach einer Richtung gestreckte Form, die bezüglich der Längsrichtung der Rampe geneigt ist, sowie eine solche Breite aufweisen, daß sie Führungslöcher bilden.

9. Vorrichtung nach Anspruch 8, dadurch gekennzeichnet, daß das an einem der Enden der Rampe vorgesehene Langloch (40) eine zu dem zugeordneten Lagerzapfen (37) komplementäre Form aufweist, so daß dieser einen drehinvarianten Bezugspunkt bildet.

10. Vorrichtung nach Anspruch 8 oder 9, dadurch gekennzeichnet, daß jeder Lagerzapfen (35, 36, 37) über Mittel zur Positionsregulierung an der Trommel (1) befestigt ist.

11. Vorrichtung nach einem der Ansprüche 8 bis 10, dadurch gekennzeichnet, daß jeder Lagerzapfen (35, 36, 37) einen Durchmesser aufweist, der leicht über dem Durchmesser des an der Rampe vorgesehenen Langlochs (38, 39, 40) liegt (oder zu diesem gleich ist) und einen axialen Spalt aufweist, der ein zylindrisches Segment mit reduzierter Größe bildet, das die Rolle einer Feder spielen soll.

12. Gerät zu Aufnahme und/oder Wiedergabe von Informationen auf Magnetband, das mit der Vorrichtung nach einem der Ansprüche 1 bis 11 versehen ist.

## Claims

1. A device for guiding a magnetic tape (7) suitable for being wound helically around a cylindrical drum (1) and for running past at least one magnetic head (6A-6C) driven in rotation around the periphery of a slot (4) provided in an equatorial plane of the drum (1), the device being of the type comprising elongate bearing means (12) linked to the drum (1) and defining at least two bearing points against which one of the edges (13), bottom edge or top edge, of the tape (7) may bear, the device including link means (17, 18, 25; 26-28) linking the bearing means (12) to the drum (1), wherein said link means (17, 18, 25; 26-28) are suitable, under the effect of differential thermal expansion between, on the one hand, the drum (1) and, on the other hand, said linking means (17, 18, 25; 26-28) or bearing means (12), for modifying the inclination of the bearing means (12) as a function of temperature resulting from a rotation of bearing means (12) about an axis extending transversely to the axis of the drum (1) and passing through a point of said drum (1) which is invariant in rotation, and whose position is fixed regardless of temperature.

2. A device according to claim 1, wherein the bearing means (12) are constituted by a helical ramp.

3. A device according to claim 2, wherein the link means (17, 18, 25; 26-28) are constituted by fixing members each of which is suitable for providing linear expansion whose value is a function of the position of the corresponding member along the ramp.

4. A device according to claim 3, wherein the link means (17, 18, 25; 26-28) comprise a set of tabs distributed along the ramp and disposed parallel to the axis of the drum, each tab being fixed at one of its ends to the drum and at its other end to the base of the ramp, said tabs being constituted by a material whose coefficient of thermal expansion is different at least from that of the material consituting the drum, said tabs also being of increasing length depending on their position along the ramp.

5. A device according to claim 4, wherein one of the ends (in the longitudinal direction) of the ramp is fixed to the drum (1) in such a manner as to constitute an invariant reference point.

6. A device according to anyone of claims 3 to 5, wherein the ramp and the drum (1) are made of aluminum alloy and the tabs are made of an alloy of iron and nickel (known under the trademark Invar).

7. A device according to claim 1 or 2, wherein the link means (17, 18, 25; 26-28) are suitable for allowing the bearing means to lengthen longitudinally relative to the drum by thermal expansion, and for transforming such longitudinal elongation into rotary motion about a radial axis.

8. A device according to claims 2 and 7, wherein the ramp and the drum (1) are made of materials having different coefficients of thermal expansion, with the link means comprising a set of pegs (35, 36, 37) distributed along the drum (1) in an axial direction and projecting from the surface thereof, said pegs being suitable for cooperating with openings (38, 39, 40) provided in the ramp, said openings being generally elongate in shape along a direction which is inclined relative to the longitudinal direction of the ramp, and being of a width such as to consitute guide openings.

9. A device according to claim 8, wherein the opening (40) provided at one of the ends of the ramp is complementary in shape to the associated peg (37), such that said peg constitutes an invariant reference point in rotation.

10. A device according to claim 8 or 9, wherein each peg (35, 36, 37) is fixed to the drum (1) via position-adjusting means.

11. A device according to anyone of claims 8 to 10, wherein each peg (35, 36, 37) has a diameter which is slightly greater than or equal to the diameter of the opening (38, 39, 40) provided in the ramp, and includes an axial slot defining a small-sized cylindrical segment intended to act as a spring.

12. Apparatus for recording and/or reading information on a magnetic tape, said apparatus being provided with a device according to one of claims 1 to 11.
